# EUROPÄISCHE PATENTANMELDUNG

(11) **EP 1 495 887 A2**
(43) Veröffentlichungstag der Anmeldung: **12.01.2005**
(21) Anmeldenummer: 04016058.2
(22) Anmeldetag: 08.07.2004
(51) Int. Cl.: B60J 5/10

(54) **Kraftfahrzeug mit verbesserter Heckfunktionalität**

(30) Priorität: 10.07.2003 DE 10331421
(71) Anmelder: Webasto AG, 82131 Stockdorf (DE)
(72) Erfinder: De Gaillard, Francois, 75016 Paris (FR)
(74) Vertreter: Bedenbecker, Markus

(57) **Zusammenfassung**

Die Erfindung betrifft ein Kraftfahrzeug, insbesondere eine Limousine oder ein Coupé, mit einem heckseitigen Kofferraum (3) und einer Abdeckeinrichtung (5) zum wahlweisen Verschließen oder Freigeben einer oberseitigen Kofferraumöffnung (4), wobei zur Erhöhung der Variabilität des Heckbereichs des Fahrzeugs vorgesehen ist, daß die Abdeckeinrichtung (5) mehrere Abdeckteile (42) aufweist, die beidseits der Kofferraumöffnung (4) verschiebbar gelagert und in Offenstellung zum Freigeben der Kofferraumöffnung (4) nach vorne in eine Ablagestellung verschiebbar sind. Gemäß einer weiteren Lösung ist vorgesehen, daß mittels einer über dem Kofferraum angebrachten Ladebox ein zusätzliches Ladevolumen bereitgestellt wird und daß ein bewegbarer Boden der Ladebox verstellbar ist zwischen einer Schließstellung, in der die Ladebox zum Kofferraum hin abgetrennt ist, und einer Offenstellung, in der die Ladebox zum Kofferraum hin bei freigegebener oberseitiger Kofferraumöffnung geöffnet ist.

## Beschreibung

Die Erfindung betrifft ein Kraftfahrzeug, insbesondere eine Limousine oder ein Coupé, mit einem heckseitigen Kofferraum und einer Abdeckeinrichtung zum wahlweisen Verschließen oder Freigeben einer oberseitigen Kofferraumöffnung.

Aus der DE 196 15 540 A1 ist ein Kombi-Personenkraftwagen mit einer oberen nach oben schwenkenden Heckklappe und mit einer unteren nach unten schwenkenden Heckklappe bekannt geworden. Durch Verschwenken einer oder beider Heckklappen wird in üblicher Weise der Laderaum von der Heckseite her zugänglich. Ein vergleichbarer PKW ist auch in der US 6,227,594 B1 offenbart.

Aufgabe der Erfindung ist es, ein eingangs genanntes Kraftfahrzeug zu schaffen, dessen Heckbereich durch große Variabilität vielfältig nutzbar ist.

Diese Aufgabe wird erfindungsgemäß durch ein Kraftfahrzeug mit den Merkmalen des Anspruchs 1 sowie durch ein Kraftfahrzeug mit den Merkmalen- des Anspruchs 2 gelöst: Vorteilhafte Ausgestaltungen der Erfindung sind in den Unteransprüchen angegeben.

Bei dem Fahrzeug gemäß Anspruch 1 ist vorteilhaft, daß die Abdeckteile in ihre vordere versenkte Ablagestellung verschoben werden können, so daß die Ladefläche in der Art eines Pickups nutzbar ist. Dies erhöht den Gebrauchsnutzen erheblich. Insbesondere mit einer vielfältig verstellbaren Heckklappe ist die Nutzung der Ladefläche verbessert.

Bei dem Fahrzeug gemäß Anspruch 2 ist vorteilhaft, daß mittels der Ladebox ein zusätzliches Ladevolumen bereitgestellt werden kann, wobei dies ein Fahrzeug voraussetzt, das eine entsprechende oberseitige freilegbare Öffnung in der Karosserie aufweist. Die Ladebox kann an unterschiedliche Fahrzeuge angepaßt sein oder mittels Adapter leicht anzupassen sein. Die Bereitstellung eines zusätzlichen Nutzvolumens stellt einen großen Vorteil dar. Durch den bewegbare Boden erhöhen sich die Nutzungsmöglichkeiten.

Nachfolgend wird ein Ausführungsbeispiel des Kraftfahrzeugs unter Bezugnahme auf die Zeichnung näher erläutert. Es zeigt:
- Fig. 1: in einer perspektivischen Heckansicht einen Personenkraftwagen mit teilweise geöffneter Kofferraumabdeckung;
- Fig. 2: in einer Ansicht gemäß Fig. 1 den Personenkraftwagen mit geöffneter Kofferraumabdeckung und vertikal herabgeschwenkter Heckklappe;
- Fig. 3: in einer Ansicht gemäß Fig. 1 den Personenkraftwagen mit geöffneter Kofferraumabdeckung und horizontal ausgeschwenkter und Ladegut tragender Heckklappe;
- Fig. 4: in einer Ansicht gemäß Fig. 3 den Personenkraftwagen mit geöffneter Kofferraumabdeckung und horizontal ausgeschwenkter und abgesenk- ter Heckklappe;
- Fig. 5: in einer Seitenansicht in schematischer Darstellung das Fahrzeugheck mit einer Lagereinrichtung für die Heckklappe in unterschiedlichen Be- wegüngsstellungen;
- Fig. 6: in einer Ansicht gemäß Fig. 1 den Personenkraftwagen mit geöffneter Kofferraumabdeckung und darin in Funktionsstellung angeordneten Sitzen mit Personen;
- Fig. 7: in einer Ansicht gemäß Fig. 6 den Personenkraftwagen mit geöffneter Kofferraumabdeckung und Darstellung der Umwandlung;
- Fig. 8: in einer perspektivischen Heckansicht einen Personenkraftwagen mit Fließheck (Kombi) mit einer Ladebox;
- Fig. 9: in einer perspektivischen Heckansicht einen Personenkraftwagen mit Fließheck (Kombi) mit einer Ladebox;
- Fig. 10: in einer perspektivischen Draufsicht eine Ladebox für einen Kraftwagen;
- Fig. 11: in einer Seitenansicht das Heck eines Kraftwagens mit einer daran an- gebrachten Ladebox, wobei ein bewegbarer Boden der Ladebox ge- schlossen ist; und
- Fig. 12: in einer Seitenansicht gemäß Fig. 11 das Heck des Kraftwagens mit der Ladebox, deren bewegbarer Boden geöffnet ist.

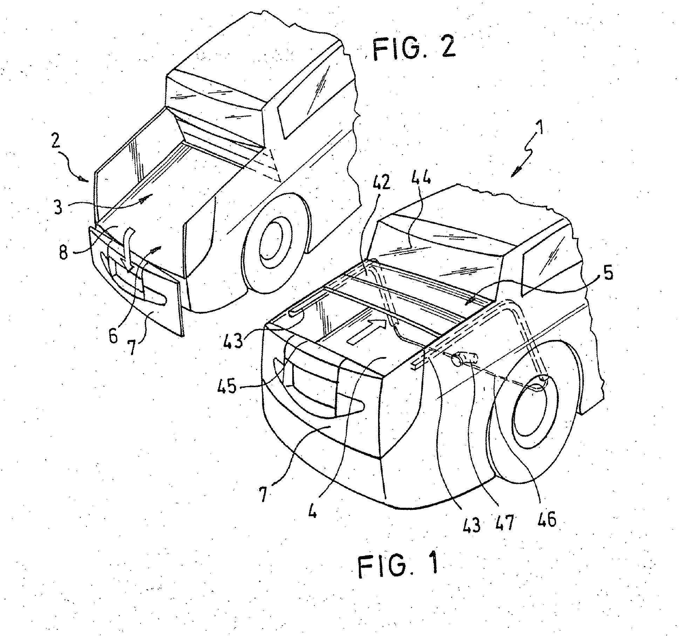

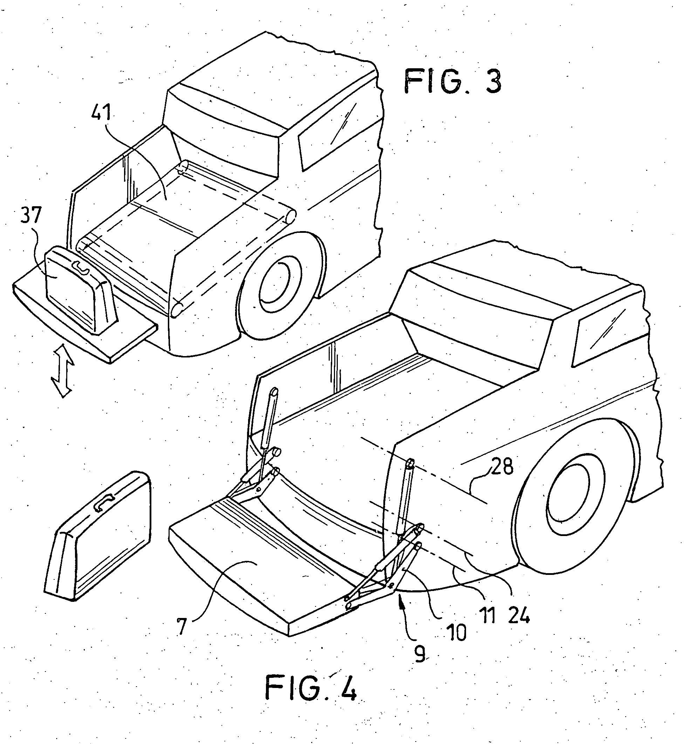

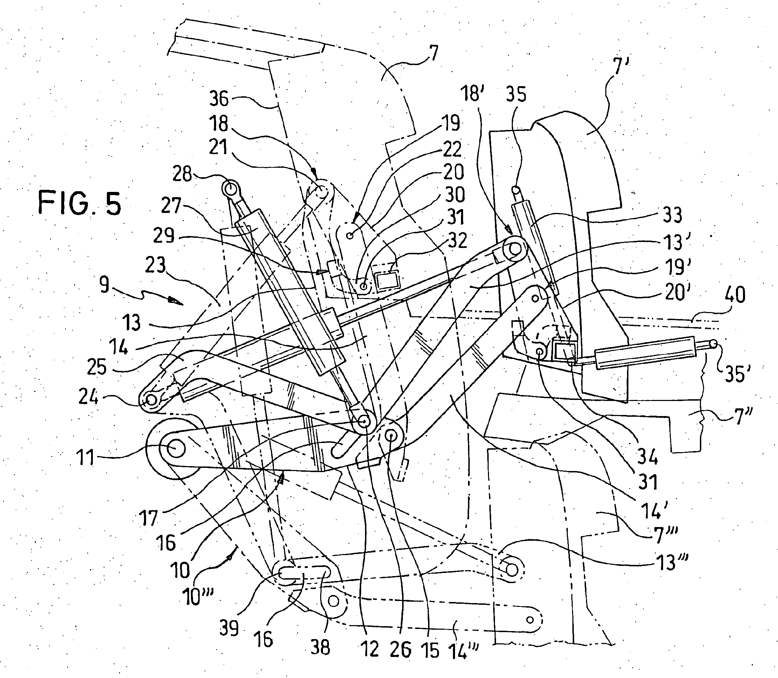

Ein Personenkraftwagen 1, beispielsweise in der Art einer Stufenhecklimousine (siehe Fig. 1 bis 4), weist ein Fahrzeugheck 2 mit einem Lade- oder Kofferraum 3 auf, dessen obere Kofferraumöffnung 4 mittels einer Abdeckeinrichtung 5 verschließbar und zumindest teilweise freilegbar ist. Eine heckseitige Kofferraumöffnung 6 ist mittels einer bewegbaren Heckklappe 7 verschließbar, die sich in etwa bis zu einer Ladefläche bzw. einem Boden 8 des Kofferraums 3 erstreckt und in Schließstellung im wesentlichen vertikal oder gegenüber der Vertikalen geneigt angeordnet ist. Die Heckklappe 7 ist am Fahrzeugheck 2 mittels einer Lagereinrichtung 9 (Fig. 4 und 5) bewegbar gelagert, die beidseits der heckseitigen Kofferraumöffnung 6 an den Fahrzeugseitenwänden angeordnet ist und jeweils einen Hauptlagerarm 10 aufweist, der an der Karosserie um eine Schwenkachse 11 verschwenkbar gelagert ist und sich in der Schließstellung der Heckklappe 7 von der Schwenkachse 11 nach hinten erstreckt. Am der Schwenkachse 11 gegenüberliegenden Hinterabschnitt 12 des Hauptlagerarms 10 sind ein erster Lenker 13 und ein zweiter Lenker 14 eines Viergelenks schwenkbar gelagert, wobei der zweite Lenker 14 mittels einer am Hauptlagerarm 10 ortsfesten Schwenkachse 15 gelagert ist und der erste Lenker 13 in einem im Hauptlagerarm 10 gebildeten Langloch 16 gelagert ist und sein Schwenklager bzw. seine Schwenkachse 17 bei einer nachfolgend beschriebenen Schwenkbewegung eine Ausgleichsbewegung ausführen kann. Die gegenüberliegenden Enden 18 und 19 der beiden Lenker 13 bzw. 14 sind an einem Trägerteil 20 der Heckklappe 7 in Schwenklagern 21 bzw. 22 angelenkt.

Ein erster Hydraulikzylinder 23 ist einerseits an der Karosserie um eine zur Schwenkachse 11 des Hauptlagerarms 10 beabstandete Schwenkachse 24 und andererseits an dem Trägerteil 20 der Heckklappe 7 koaxial zur Schwenkachse des Schwenklagers 21 angebracht. Ein Steuerarm 25 ist einerseits an der Karosserie koaxial zur Schwenkachse 24 des ersten Hydraulikzylinders 23 schwenkbar gelagert und andererseits mit einem Lagerzapfen 26 in dem Langloch 16 des Hauptlagerarms 10 verschwenkbar und verschiebbar aufgenommen, wobei der Lagerzapfen 26 gleichzeitig das Schwenklager des ersten Lenkers 13 im Langloch 16 bildet bzw. koaxial zu seiner Schwenkachse 17 angeordnet ist.

Ein zweiter Hydraulikzylinder 27 ist einerseits an der Karosserie um eine oberhalb des Hauptlagerarms 10 angeordnete Schwenkachse 28 und andererseits an dem Lagerzapfen 26 schwenkbar angelenkt.

Ein an der Heckklappe 7 fest angebrachtes Profilrohrstück 29, z. B. das Endstück eines über die Breite der Heckklappe 7 verlaufenden Rohres, ist mit einem Schwenkarm 30 fest verbunden, der mittels eines eine Schwenkachse 31 aufweisenden Schwenkgelenks an dem Trägerteil 20 der Heckklappe 7 angelenkt ist, so daß die Heckklappe 7 aus ihrer aufrechten Stellung nach hinten aufgeschwenkt werden kann. In der z. B. manuell aufgeschwenkten Schwenkstellung der Heckklappe 7 liegt das Profilrohrstück 29 an einem Profilrohrstück 32 an, das am Trägerteil 20 fest angebracht ist und das z. B. das Endstück eines über die Breite der Heckklappe 7 verlaufenden Trägerrohres ist, das die beiden seitlichen, sich gegenüberliegenden Trägerteil 20 miteinander verbindet.

Vorzugsweise ist zum Verschwenken der Heckklappe 7 aus ihrer aufrechten Stellung in ihre waagrechte Stellung ein Schwenkantrieb vorgesehen, z. B. ein Hydraulikzylinder 33, der einerseits am Trägerteil 20 in einer zur Schwenkachse 31 beabstandeten Schwenkachse 34 und andererseits an der Heckklappe 7 mittels eines Gelenks 35 angelenkt ist (schematisch dargestellt).

Zum Öffnen der Heckklappe 7 aus ihrer Schließstellung (siehe Fig.1 und Fig. 5) wird zunächst der erste Hydraulikzylinder 23 betätigt, so daß er sich durch Ausfahren seines Kolbens verlängert. Dabei verschwenkt er die beiden Lenker 13 und 14 des Viergelenks nach hinten, so daß die Heckklappe annähernd in einer Parallelverschiebung nach hinten versetzt wird (in Fig. 5 sind die Zwischenstellungen der Heckklappe 7' und der Lenker 13' und 14' dargestellt). Aus dieser Zwischenstellung (Heckklappe 7') kann durch Betätigen des dritten Hydraulikzylinders 33 die Heckklappe 7 nach hinten in eine horizontale Position verstellt werden (Stellung 7"), so daß auf der Innenseite 36 der Heckklappe 7 Ladegut 37 oder Gepäck positioniert werden kann.

Die Heckklappe 7 kann aus ihrer ausgeklappten Stellung 7" wie auch aus ihrer hochgeklappten Stellung 7' oder einer Zwischenstellung durch Betätigen des ersten und des zweiten Hauptzylinders 23 bzw. 27 abwärts bewegt werden. Dabei wird zusätzlich durch den ausfahrenden zweiten Hauptzylinder 27 der Hauptlagerarm 10 nach unten verschwenkt (Stellung 10'"). Der Steuerarm 25 verschwenkt aufgrund seiner zur Schwenkachse 11 des Hauptlagerarms 10 exzentrischen Schwenkachse 24 derart, daß sein Lagerzapfen 26 vom Hinterende 38 des Langlochs 16 an dessen Vorderende 39 verlagert wird, wodurch der erste Lenker 13 des Viergelenks während seinem Verschwenken mit seiner Schwenkachse 17 nach vorne verlagert wird. Durch diese Steuerung wird erreicht, daß die Heckklappe 7 in ihrer annähernd vertikalen Stellung 7' bzw. der horizontalen Stellung 7" abwärts verlagert werden kann. Das Ausschwenken der Heckklappe 7 in ihre horizontale Stellung durch Betätigen des dritten.Hydraulikzylinders 33 kann in jeder Ausschwenkstellung des Viergelenks erfolgen.

Der Kofferraum 3 kann einen verschiebbar gelagerten Ladeboden 40 aufweisen (Fig. 5), der z. B. bei herabgeschwenkter und herabgeklappter Heckklappe 7 (z. B. Stellung 7") über die Heckklappe 7 ausfahrbar ist. Des weiteren kann vorgesehen sein, daß der Ladeboden 40 oder zumindest ein vorderer abtrennbarer Teil auf der Innenseite 36 der ausgeklappten Heckklappe 7 angeordnet werden kann. Zum Aufnehmen des Ladebodens 40 weist die Heckklappe 7 Führungen oder dergleichen auf. Statt eines festen plattenförmigen Ladebodens kann auch eine umlaufende Tragstruktur wie z. B. ein Förderband 41 (siehe Fig. 3) den bewegbaren Ladeboden bilden.

Die Abdeckeinrichtung 5 enthält Lamellen 42, die an zwei Führungsschienen 43 verschiebbar gelagert sind, die an den Fahrzeugseitenwänden beidseits der oberen Kofferraumöffnung 4 angeordnet sind und zu ihrem Vorderende hin im Bereich unterhalb einer Heckscheibe 44 oder einer Hutablage nach unten verlaufen, beispielsweise hinter den Sitzlehnen der Sitze oder Rücksitze des Fahrzeugs. Die Lamellen 42 sind miteinander verschwenkbar verbunden, so daß sie als flächige Einheit zwischen ihrer Schließstellung, in der sie an einen Oberrand 45 der geschlossenen Heckklappe 7 angrenzen, über beliebige Zwischenstellungen nach vorne in ihre Offenstellung oder Ablagestellung hinter den Rücksitzen verfahren werden können, in der sie die obere Kofferraumöffnung 4 freilegen. Die Lamellen 42 sind beispielsweise, wie in der deutschen Patentanmeldung mit dem Aktenzeichen 103 20 538.1 beschrieben, aufgebaut und mittels einer flexiblen Struktur wie z. B. einer Folie miteinander verbunden, die die Dichtungsfunktion zwischen den Lamellen 42 übernimmt. Eine Antriebseinrichtung für die Abdeckeinrichtung 5 bzw. die Lamellen 42 enthält an jeder Führungsschiene 43 ein Antriebskabel 46, das zumindest mit der vordersten Lamelle 42 verbunden ist, und einen zentralen Antriebsmotor 47, von dem die beiden Antriebskabel 46 antreibbar bzw. verschiebbar sind. Zwischen den linear oder leicht gekrümmt abwärts verlaufenden Vorderabschnitten der Führungsschienen 43 ist somit ein Aufnahmeraum für die Lamellen 42 in ihrer Offenstellung definiert. Da die Führungsschienen 43 nur wenig gekrümmt sind, können in Fahrzeuglängsrichtung breitere Lamellen 42 verwendet werden, die in einer solchen Breite bei einer rolloartig aufgewickelten Ablagestellung nicht verwendet werden könnten.

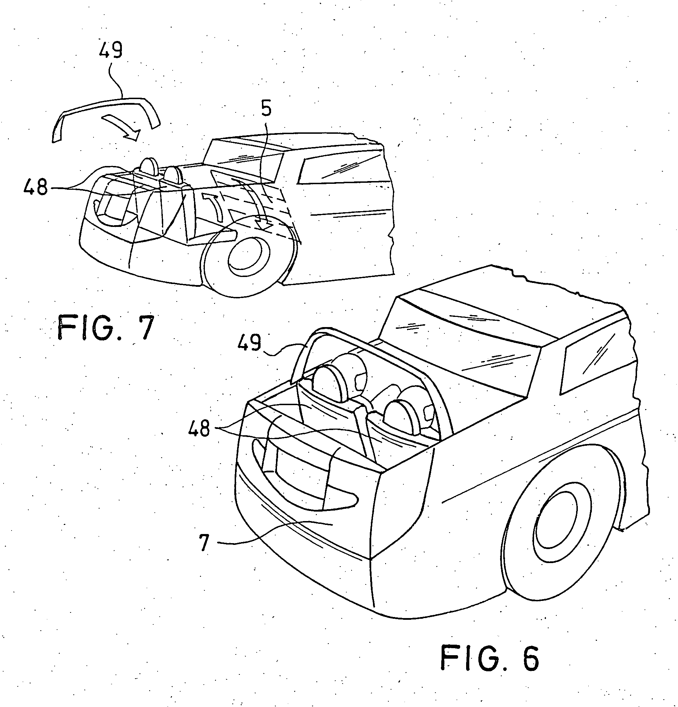

Gemäß einer Ausführungsform sind im Kofferraum 3 des Fahrzeugs zwei Sitze 48 (Fig. 6 und 7) nebeneinander in einer Nutzstellung positionierbar. Die beiden Sitze 48 sind beispielsweise zumindest teilweise im oder am Kofferraumboden versenkt angeordnet und werden bei Bedarf nach oben ausgeklappt oder ausgefahren, so daß sie bei geöffneter Abdeckeinrichtung 5 genutzt werden können.
Zum Schutz von Personen auf den Sitzen ist eine Überrollschutzeinrichtung, z. B. ein Schutzbügel 49, in einer die Personen überragenden oder überspannenden Schutzstellung am Fahrzeug festlegbar. Die Überrollschutzeinrichtung bzw. der Schutzbügel 49 wird z. B. im Kofferraum des Fahrzeugs mitgeführt und wird bei Bedarf z. B. in rohrförmigen Aufnahmen an den hinteren Fahrzeugseitenwänden befestigt. In einer alternativen Gestaltung ist der Schutzbügel 49 am Fahrzeug schwenkbar gelagert und wird aus einer abgesenkten Ruhestellung in die aktive Schutzstellung ausgeschwenkt. Der Schutzbügel 49 kann auch in einer Ruhestellung am Umfang der Heckscheibe 44 angeordnet sein und mittels einer Schiebeführung nach hinten in seine aktive Stellung ausgefahren werden. Der Kofferraum 3 kann somit bei geöffneter Abdeckeinrichtung 5 zum Personentransport verwendet werden. Der Zugang erfolgt z. B. bei geöffneter Heckklappe 7. Die Überrollschutzeinrichtung biete den Personen die erforderliche Sicherheit.

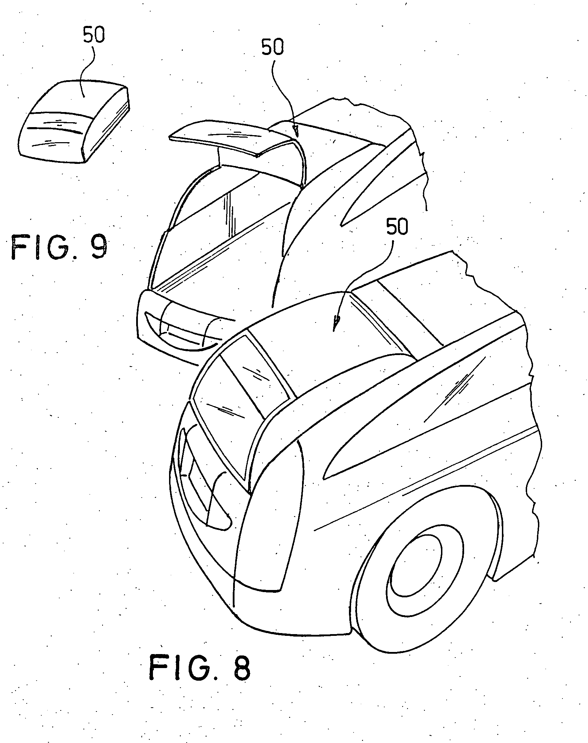

Gemäß einem weiteren Ausführungsbeispiel der Erfindung ist das Fahrzeug bzw. sein Heck umwandelbar, so daß es die Gestalt und die Funktionalität in der Art eines Kombis erhält (siehe Fig. 8 bis 12). Eine Ladebox 50 zum heckseitigen Anbringen an dem Fahrzeug enthält zwei sich gegenüberliegende Seitenwände 51 und eine Vorderwand 52. Eine obere Abdeckung 53 überspannt den Innenraum und ist z. B. aus Polycarbonat durchsichtig gebildet und kann auch einstückig mit der Vorderwand 52 gebildet ein. Die Seitenwände können ebenfalls aus durchsichtigem Polycarbonat oder aus einem anderen Kunststoff oder aus Metall gebildet sein. Ein Boden 54 der Ladebox 50 ist beweglich gebildet und kann aus seiner Schließstellung zumindest teilweise entfernt werden, so daß eine entsprechende Bodenöffnung 55 freigelegt werden kann. Der Boden 54 ist beispielsweise ein Lamellenschiebeboden 56 mit einzelnen Lamellen, die an ihren aneinander angrenzenden Längsseiten gegeneinander verschwenkbar verbunden sind. An den Seitenwänden sind Führungen für den Lamellenschiebeboden 56 bzw. die Lamellen angebracht. Jede Führung verläuft entlang des gesamten Unterrandes des Seitenteils 51, nach einer Umlenkung entlang des Vorderrandes des Seitenteils 51 nach oben und nach einer weiteren Umlenkung entlang des Oberrandes des Seitenteils 51 schließlich in entgegengesetzter Richtung zurück. Am Hinterabschnitt besitzt die Ladebox 50 eine Ladeöffnung 57, die von einer Ladeboxklappe 58 verschließbar ist, die z. B. abgewinkelt gebildet ist, um eine Schwenkachse am Oberrand der Seitenwände schwenkbar ist und damit sowohl eine Rückseite 59 wie auch eine Oberseite 60 aufweist, die zum Verschließen einer rückseitigen Öffnung 61 hinter der oberen Abdeckung 53 vorgesehen ist. Feder-Dämpferelemente 62 unterstützen die Bedienung der Ladeboxklappe.

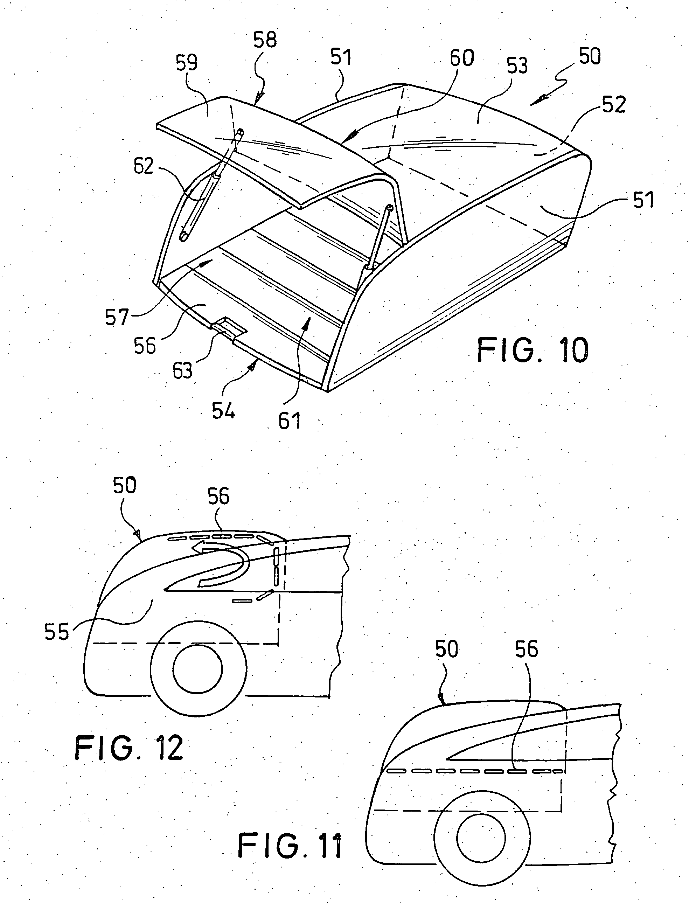

Die Ladebox 50 ist in ihren Abmaßen an die Aufnahmeposition am Fahrzeugheck angepaßt und mittels Halteeinrichtungen am Oberrand von den Kofferraum seitlich begrenzenden Karosseriestrukturen festlegbar. Die Vorderwand 52 ist an die Heckscheibe angepaßt und grenzt an diese an, so daß ein im wesentlichen bündiger Übergang zwischen der Fahrzeugkarosserie und der Ladebox 50 geschaffen ist. Wenn die Ladebox 50 bei dem in den Fig. 1 bis 7 dargestellten Fahrzeug oder bei dem in den Fig. 8 und 9 dargestellten Fahrzeug angebracht ist, kann nach Öffnen der Abdeckung 5 des Kofferraums 3 und nach Öffnen des Lamellenschiebebodens 56 ein kombiähnlicher Heckraum genutzt werden. Zum Öffnen des Lämellenschiebebodens 56 wird dieser mittels eines heckseitigen Handgriffs 63 an der letzten Lamelle nach vorne verschoben. Dabei gleiten die Lamellen entlang der Innenseite der Vorderwand 52 und der Unterseite der Abdeckung 53 in ihre Ofenstellung (siehe Fig. 12). Bei geschlossenem Lamellenschiebeboden 56 ist die Ladebox 50 als zusätzlicher abgeschlossener Lade- oder Kofferraum nutzbar, der über die Ladeboxklappe 58 von außen zugänglich ist:

Die Ladebox-50 eignet sich auch für andere Arten von Kofferraumabdeckungen wie 'z. B. für aufrollbare Rollos; für entfernbar Abdeckung oder dergleichen. Die Ladeboxklappe 58 kann über den Lamellenschiebeboden 56 hinaus weiter nach unten reichen, so daß bei einer Abwandlung eines Fahrzeugs, bei dem keine Heckklappe gemäß der Figuren verwendet wird, die Ladeboxklappe 58 auch die heckseitige Kofferraumöffnung 6 verschließen kann.

Auch hier kann der Boden des Kofferraums als Schiebe- oder Gleitladeboden gebildet sein, z. B. in Form einer umlaufenden flexiblen Struktur, die auf einer festen Bodenfläche gleitend in Längsrichtung verschoben werden kann.

Grundsätzlich kann bei den dargestellten Fahrzeugen die Heckklappe 7 in ihrer abgesenkten horizontalen Ladestellung auch als Lastenträger wie z. B. als Fahrradträger verwendet werden. Zu diesem Zweck können zusätzliche Halterungen an der Heckklappe 7 und/oder an der heckseitigen Karosserie angebracht werden.

Wenn die Abdeckeinrichtung 5 bzw. der Lamellenschiebeboden 56 geöffnet ist, bildet der Kofferraum 3 eine offene Ladefläche in der Art eines Pickups bzw. einen hohen Laderaum in der Art eines Kombis. Durch Herabschwenken der Heckklappe 7 auf Höhe der Ladefläche kann diese dementsprechend verlängert werden.

Die Ladebox kann auch auf dem Dach eines Fahrzeugs wie eines Kombis oder dergleichen angebracht werden, wobei ein hinterer Dachabschnitt z. B. mittels eines nach vorne verfahrbaren Deckels oder dergleichen freilegbar ist. Über dieser freilegbaren Öffnung kann die Ladebox 50 am Dach des Fahrzeugs angebracht werden und in der beschriebenen Art verwendet werden.

### Bezugszeichenliste

- 1: Personenkraftwagen
- 2: Fahrzeugheck
- 3: Kofferraum
- 4: obere Kofferraumöffnung
- 5: Abdeckeinrichtung
- 6: heckseitige Kofferraumöffnung
- 7: Heckklappe
- 8: Boden
- 9: Lagereinrichtung
- 10: Hauptlagerarm
- 11: Schwenkachse
- 12: Hinterabschnitt
- 13: erster Lenker
- 14: zweiter Lenker
- 15: Schwenkachse
- 16: Langloch
- 17: Schwenkachse
- 18: Ende
- 19: Ende
- 20: Trägerteil
- 21: Schwenklager
- 22: Schwenklager
- 23: erster Hydraulikzylinder
- 24: Schwenkachse
- 25: Steuerarm
- 26: Lagerzapfen
- 27: zweiter Hydraulikzylinder
- 28: Schwenkachse
- 29: Profilrohrstück
- 30: Schwenkarm

- 31: Schwenkachse
- 32: Profilrohrstück
- 33: Hydraulikzylinder
- 34: Schwenkachse
- 35: Gelenk
- 36: Innenseite
- 37: Ladegut
- 38: Hinterende
- 39: Vorderende
- 40: Ladeboden
- 41: Förderband
- 42: Lamelle
- 43: Führungsschiene
- 44: Heckscheibe
- 45: Oberrand
- 46: Antriebskabel
- 47: Antriebsmotor
- 48: Sitz
- 49: Schutzbügel
- 50: Ladebox
- 51: Seitenwand
- 52: Vorderwand
- 53: Abdeckung
- 54: Boden
- 55: Bodenöffnung
- 56: Lamellenschiebeboden
- 57: Ladeöffnung
- 58: Ladeboxklappe
- 59: Rückseite
- 60: Oberseite

- 61: Öffnung
- 62: Feder-Dämpferelement
- 63: Handgriff

## Patentansprüche

1. Kraftfahrzeug, insbesondere Limousine oder Coupé, mit einem heckseitigen Kofferraum und einer Abdeckeinrichtung zum wahlweisen Verschließen oder Freigeben einer oberseitigen Kofferraumöffnung,
**dadurch gekennzeichnet, daß** die Abdeckeinrichtung (5) mehrere Abdeckteile (42) aufweist, die beidseits der Kofferraumöffnung (4) verschiebbar gelagert und in Offenstellung zum Freigeben der Kofferraumöffnung (4) nach vorne in eine Ablagestellung verschiebbar sind.

2. Kraftfahrzeug mit einem heckseitigen Kofferraum oder Laderaum und einer Abdeckeinrichtung zum wahlweisen Verschließen oder Freigeben einer oberseitigen Kofferraumöffnung oder Laderaumöffnung,
**dadurch gekennzeichnet, daß** mittels einer über dem Kofferraum (3) angebrachten Ladebox (50) ein zusätzliches Ladevolumen bereitgestellt wird und daß ein bewegbarer Boden (52 ) der Ladebox (50) verstellbar ist zwischen einer Schließstellung, in der die Ladebox (50) zum Kofferraum (3) hin abgetrennt ist, und einer Offenstellung, in der die Ladebox (50) zum Kofferraum (3) hin bei freigegebener oberseitiger Kofferraumöffnung (4) geöffnet ist.

3. Kraftfahrzeug nach Anspruch 1 oder 2,
**dadurch gekennzeichnet, daß** in dem Kofferraum (3) zumindest ein Fahrzeugsitz (48) zum Personentransport bei geöffneter Abdeckeinrichtung (5) angeordnet ist.

4. Kraftfahrzeug nach Anspruch 3,
**dadurch gekennzeichnet, daß** der Fahrzeugsitz aus einer Außergebrauchstellung am oder im Boden des Kofferraums in eine Nutzstellung verstellbar ist.

5. Kraftfahrzeug nach Anspruch 3 oder 4,
**dadurch gekennzeichnet, daß** eine Überrollschutzeinrichtung, insbesondere ein Überrollbügel, in einer Schutzstellung für die Fahrzeugsitze an der Karosserie festlegbar ist.

6. Kraftfahrzeug nach Anspruch 5,
**dadurch gekennzeichnet, daß** die Überrollschutzeinrichtung bzw. der Überrollbügel an der Karosserie gelagert ist und aus einer abgesenkten Außergebrauchstellung in seine Schutzstellung ausfahrbar oder ausschwenkbar ist.

7. Kraftfahrzeug nach einem der Ansprüche 1 bis 6,
**dadurch gekennzeichnet, daß** die Abdeckteile lamellenartig gebildet sind.

8. Kraftfahrzeug nach einem der Ansprüche 1 bis 7,
**dadurch gekennzeichnet, daß** die Abdeckteile an seitlichen karosseriefesten Schienen verschiebbar geführt sind und in einem Ablageraum ablegbar sind, der sich zumindest teilweise vor dem Kofferraum erstreckt.

9. Kraftfahrzeug nach einem der Ansprüche 1 bis 8,
**dadurch gekennzeichnet, daß** die Abdeckteile mittels einer flexiblen flächige Struktur miteinander dicht und gegeneinander verschwenkbar verbunden sind.

10. Kraftfahrzeug nach einem der Ansprüche 1 bis 9,
**dadurch gekennzeichnet, daß** die Abdeckteile in dem Ablageraum flächig aneinander angrenzend und im wesentlichen hinter den Rücksitzen angeordnet sind.

11. Kraftfahrzeug nach einem der Ansprüche 1 bis 10,
**dadurch gekennzeichnet, daß** die Abdeckteile in Querrichtung gewölbt sind.

12. Kraftfahrzeug nach einem der Ansprüche 1 bis 11,
**dadurch gekennzeichnet, daß** eine Antriebseinrichtung zum Verschieben der Abdeckteile vorgesehen ist.

13. Kraftfahrzeug nach einem der Ansprüche 1 bis 12,
**dadurch gekennzeichnet, daß** am Fahrzeug eine Heckklappe mittels einer Lagereinrichtung zum Schließen und zum Freigeben einer heckseitigen Beladeöffnung des Kofferraums bewegbar gelagert ist.

14. Kraftfahrzeug nach Anspruch 13,
**dadurch gekennzeichnet, daß** eine Schwenklagerung mit einem Viergelenk für die Heckklappe vorgesehen ist.

15. Kraftfahrzeug nach Ansprüche 14,
**dadurch gekennzeichnet, daß** das Viergelenk an einem verschwenkbaren Hauptlagerarm gelagert ist, der mittels einer Antriebseinrichtung verschwenkbar ist, und daß das Viergelenk mittels eines eigenen Antriebs verschwenkbar ist.

16. Kraftfahrzeug nach Ansprüche 14 oder 15,
**dadurch gekennzeichnet, daß** das Viergelenk ein heckseitiges Trägerteil enthält, an dem die Heckklappe verschwenkbar gelagert ist.

17. Kraftfahrzeug nach Anspruch 15 oder 16,
**dadurch gekennzeichnet, daß** die Antriebe Hydraulikantrieb sind.

18. Kraftfahrzeug nach einem der Ansprüche 1 bis 17,
**dadurch gekennzeichnet, daß** am Fahrzeug über der Kofferraumöffnung oder Laderaumöffnung eine Ladebox anbringbar ist.

19. Kraftfahrzeug nach Anspruch 18,
**dadurch gekennzeichnet, daß** die Ladebox einen zu öffnenden Boden, insbesondere einen Lamellenschiebeboden, aufweist.

20. Kraftfahrzeug nach Anspruch 19,
**dadurch gekennzeichnet, daß** die Lamellen beim Öffnen des Bodens entlang der Innenseite einer Vorderwand in eine Ablagestellung unter der Oberseite der Ladebox verschiebbar sind.

21. Kraftfahrzeug nach einem der Ansprüche 18 bis 20,
**dadurch gekennzeichnet, daß** die Ladebox eine rückseitige Ladeboxklappe aufweist.

22. Kraftfahrzeug nach einem der Ansprüche 18 bis 21,
**dadurch gekennzeichnet, daß** die Ladebox zumindest teilweise aus durchsichtigem Polycarbonat hergestellt ist
